# FASCICULE DE BREVET EUROPEEN

(11) **EP 3 317 470 B1**
(45) Date de publication et mention de la délivrance du brevet: **08.05.2019**
(21) Numéro de dépôt: 16734759.0
(22) Date de dépôt: 28.06.2016
(51) Int. Cl.: E04C 2/52, E04B 9/00, E04B 5/48, F24D 3/16

(54) **PANNEAU DE CONSTRUCTION DESTINÉ À LA RÉALISATION DE PAROIS CHAUFFANTES ET/OU REFROIDISSANTES DE BÂTIMENTS**
BAUPANEEL ZUR ERSTELLUNG VON HEIZWÄNDEN UND/ODER KÜHLWÄNDEN VON GEBÄUDEN
CONSTRUCTION PANEL INTENDED FOR BUILDING HEATING AND/OR COOLING WALLS OF BUILDINGS

(30) Priorité: 01.07.2015 EP 15174818
(43) Date de publication de la demande: 09.05.2018
(73) Titulaire: KEOKI Company SA, 1752 Villars-sur-Glane (CH)
(72) Inventeur: BARATTI, Alberto, 13017 Quarona Sesia (VC) (IT); BOCCIOLONE, Fausto, 13018 Valduggia (VC) (IT); CASSETTA, Paolo, 13853 Lessona (BI) (IT)
(74) Mandataire: P&TS SA (AG, Ltd.)
(86) Numéro de dépôt international: PCT/IB2016/053848
(87) Numéro de publication internationale: WO 2017/002009

(56) Documents cités:
- WO-A1-2008/143377
- JP-A- 2002 228 170
- KR-A- 20130 061 789
- KR-Y1- 200 264 930

## Description

### Domaine technique

La présente invention concerne un panneau de construction modulaire préfabriqué pour la réalisation de parois chauffantes et/ou refroidissantes de bâtiments ou ledit panneau intègre circuit technique et finition permettant d'obtenire une epaisseur très mince. Elle concerne également une paroi formée par l'assemblage rapide de tels panneaux, ainsi qu'un système d'alimentation en fluide caloporteur ou refroidisseur destiné à être raccordé à un circuit de chauffage et/ou de refroidissement formé à l'intérieur de ladite paroi.

### Etat de la technique

Dans le domaine du chauffage et/ou du refroidissement des bâtiments, il est connu d'intégrer des circuits de chauffage et/ou de refroidissement à l'intérieur des parois, telles que planchers, murs ou plafonds. De tels circuits de chauffage consistent généralement en un réseau de tubes à l'intérieur desquels un fluide caloporteur ou refroidisseur circule. L'inconvénient de cette technique connue est la nécessité de faire appel à une entreprise spécialisée pour la mise en place de tels circuits. Par ailleurs, cette technique nécessite d'effectuer de gros travaux de construction pour intégrer lesdites tubes à l'intérieur des parois. Elle n'est donc pas adaptée pour des bâtiments déjà construits, dans lesquels les tubes devraient être intégrés aux parois existantes. En outre, cette technique connue présente un inconvénient majeur en cas de fuite du fluide caloporteur ou refroidisseur. En effet, du fait du temps généralement long séparant la survenance de la fuite et sa détection par les occupants du bâtiment, ce genre de fuite entraîne souvent une dégradation importante de la paroi et du bâtiment en général, ce qui a pour conséquence d'accroître exagérément les coûts des travaux de réparation par la suite. Par ailleurs, une fois la fuite détectée, il est très difficile pour le réparateur, étant donné la difficulté d'accéder aux tubes cachés à l'intérieur des parois des bâtiments, d'une part de savoir à quel niveau se situe la fuite et d'autre part de remplacer rapidement et simplement le ou les tubes défaillants. Il est donc souvent contraint d'endommager partiellement la paroi pour pouvoir accéder auxdits tubes.

On connaît également des systèmes de plancher modulaires destinés à la pose sur un sol préexistant, que ce soit un sol fini ou une dalle brute, sans application de liant. Ces systèmes, toutefois, ne prévoient généralement pas un circuit hydraulique permettant de réaliser, par exemple, un système de chauffage. La réalisation d'un tel système de chauffage modulaire comporte plusieurs difficultés, notamment :
- Chaque nouveau système de chauffage se doit d'atteindre une efficacité énergétique au comparable avec celle des systèmes conventionnels ;
- Les sols modulaires sont souvent utilisés dans le cadre de renouvellement d'immeubles préexistant, par exemple pour refaire un sol préexistent sans avoir recours à des gros oeuvres de démolition et pose. Le nouveau sol doit alors être posé sans interférer excessivement avec les portes, embrasures, plinthes, et autres appareils préexistent, ce qui impose des contraignantes limites d'épaisseur.
- La présence d'un fluide circulant requiert des connexions hydrauliques et mécaniques de grande solidité et fiabilité.

Le document JP2002228170 décrit un système de plancher modulaire intégrant des vannes à trois voies pour réaliser des sols chauffants. Les panneaux de ce système, cependant, ont une épaisseur importante. JP2002228170 prévoit également un grand nombre de raccords hydrauliques qui ne sont pas sécurisés. Par ailleurs, les panneaux décrits en ce document ne possèdent pas de couches de finition et d'isolation, en sorte que, bien que ces panneaux permettent une simplification du travail par rapport aux systèmes de chauffage conventionnels, ces éléments important doivent toujours mis en oeuvre par des techniques conventionnelles, lentes et onéreuses.

Une autre importante application de panneaux modulaires dans la technique des bâtiments et celle des planchers surélevés couvrant un vide technique. Cette technique issue des grands centres de calcul informatique s'est désormais démocratisée et est largement utilisé en toute sorte d'espaces commerciaux et industriels. Il y a dès lors un besoin d'un système de panneaux modulaires pour plancher surélevé intégrant des circuits hydrauliques interconnectables spécifiquement adaptés à ce type d'installation.

Les collecteurs solaires conventionnels ont aussi recours à des assemblages de modules identiques ou similaires. Ces installations utilisent ordinairement des raccords hydrauliques conventionnels vissés et sont posés sur des toits ou autres endroits difficilement accessibles, sans grand souci d'esthétique. Il existe cependant un besoin de panneaux collecteurs modulaires d'assemblage rapide, sûr et sans raccords apparents, pour réaliser des parois ou des planchers solaires à des endroits plus fréquentés et visibles.

### Divulgation de l'invention

L'objet de la présente invention est donc de proposer une solution aux problèmes mentionnés précédemment.

A cet effet, conformément à l'invention, il est proposé un panneau de construction tel que défini dans la revendication 1.

D'autres caractéristiques importantes du panneau de construction de la présente invention sont également définies dans les revendications dépendantes 2 à 13.

L'invention concerne également une paroi selon les revendications 14 à 16, ainsi qu'un système d'alimentation en fluide caloporteur ou refroidisseur selon la revendication 17.

Ainsi configurée, l'invention permet une mise en place rapide et simplifiée d'un circuit de chauffage et/ou de refroidissement à l'intérieur d'une paroi d'un bâtiment, et, ce, sans devoir faire appel à une entreprise spécialisée. Par ailleurs, la paroi de l'invention pouvant être installée par-dessus une paroi existante du bâtiment, il est envisageable d'utiliser la solution de l'invention à l'intérieur de bâtiments déjà construits.

En outre, les moyens de détection mis en place au niveau de chaque panneau permettent de détecter immédiatement lorsqu'une fuite se produit et le positionnement précis de cette fuite. Une fois la fuite détectée, des moyens de contrôle pourront stopper automatiquement le système d'alimentation en fluide pour éviter toute arrivée de fluide supplémentaire et/ou émettre une alarme visuelle ou sonore pour indiquer aux occupants de l'immeuble qu'une fuite est en train de se produire. Dans une des variantes de l'invention, l'arrêt du système d'alimentation en fluide ne se fera pas automatiquement, mais résultera de l'intervention manuelle d'un opérateur. Les conséquences fâcheuses d'une propagation trop importante de la fuite à l'intérieur du bâtiment seront donc évitées. Par ailleurs, du fait du principe de modularité de la paroi de l'invention, le réparateur pourra facilement remplacer le ou les panneaux défectueux sans avoir à démonter l'ensemble de la paroi. La réparation de la fuite en sera donc considérablement simplifiée.

La présente invention se prête à la réalisation de parois dans n'importe quelle orientation par rapport à l'horizontal, qu'il s'agisse de planchers, murs ou plafonds. Les exemples se réfèrent principalement à un plancher, dans un souci de brévité, sans perte de généralité. Les termes comme "horizontal" et "vertical" se réfèrent à la position que les panneaux ont lorsqu'ils sont posés sur le sol, comme illustré par les figures. Brève description des dessins

D'autres avantages et caractéristiques de la présente invention seront mieux compris à la lecture d'un mode particulier de réalisation de l'invention et en référence aux dessins dans lesquels:
- la figure 1 est une vue en perspective éclatée d'un panneau de construction selon l'invention;
- la figure 2 est une vue partielle, en perspective et de dessous, de l'élément de base d'un panneau de construction identique ou similaire au panneau représenté sur la figure 1;
- la figure 3 est une vue partielle, en perspective et de dessus, des éléments de base respectifs de deux panneaux de construction identiques ou similaires au panneau représenté sur la figure 2, la vue mettant en évidence les moyens de connexion fluidique mis en place au niveau des faces latérales adjacentes des deux panneaux;
- la figure 4 est une vue partielle, en coupe, d'un premier mode de réalisation d'un moyen apte à assurer la connexion fluidique de deux panneaux de construction adjacents selon l'invention;
- la figure 5 est une vue partielle, en coupe, d'un deuxième mode de réalisation d'un moyen apte à assurer la connexion fluidique de deux panneaux de construction adjacents selon l'invention;
- la figure 6 est une vue en perspective et de dessus d'une paroi selon l'invention, dans lequel les éléments conducteurs de chacun des panneaux ont été retirés;
- la figure 7 est une vue agrandie d'une zone de la paroi représentée sur la figure 6;
- la figure 8 est une vue en perspective et de dessus d'un élément additionnel pouvant faire partie d'un panneau de construction identique ou similaire au panneau représenté sur la figure 1.
- la figure 9 représente un panneau de construction selon une variante de l'invention.
- la figure 10 est un détail d'une coupe (section A-A) du panneau de la figure
- la figure 11 est un détail d'une coupe (section C-C) du panneau de la figure 9.
- les figures 12 et 13 montrent deux vues des éléments de connexion mécanique du panneau de la figure 9, qui intègrent un détecteur de fuite.
- la figure 14 est un détail d'une coupe (section F-F) du panneau de la figure 9
- la figure 15 montre un exemple d'assemblage d'une paroi, plancher, ou plafond à partir des panneaux modulaires de l'invention.

### Description détaillée de modes d'exécution de l'invention

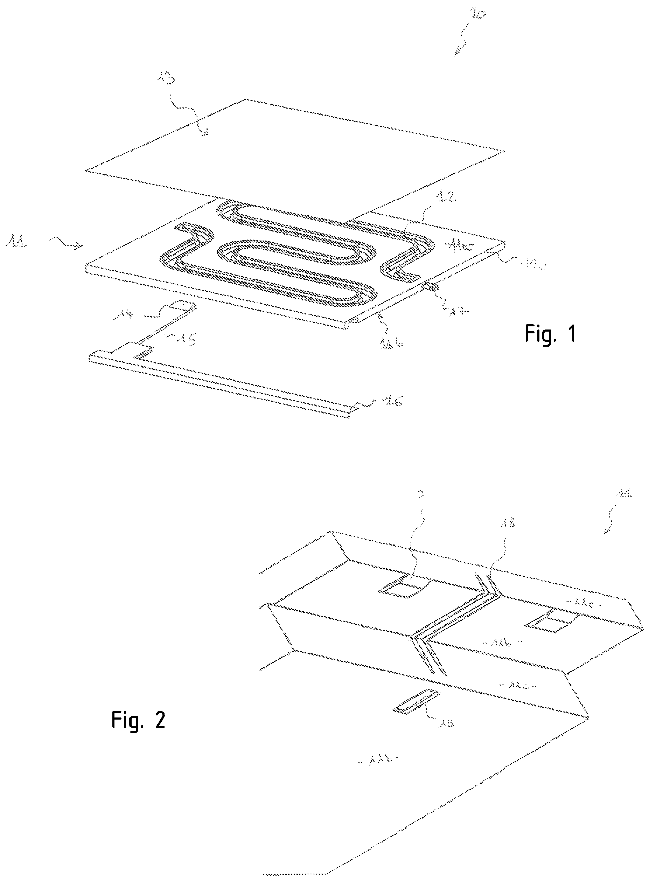

En référence à la figure 1, il est représenté un panneau de construction selon la présente invention. Ce panneau de construction comprend notamment un élément de base 11 se présentant sous la forme d'une plaque sensiblement rectangulaire d'une certaine épaisseur, ladite plaque étant définie par sa face supérieure 11a, sa face inférieure 11b et ses quatre faces latérales 11c. L'élément de base 11 sera préférentiellement formée par moulage d'une résine thermoplastique isolante et ignifuge. Lors de la formation de l'élément de base 11, des rigoles 12 ont été réalisées au niveau de la surface supérieure 11a, lesdites rigoles étant configurées pour permettre la circulation d'un fluide caloporteur ou refroidisseur à travers le panneau. Les rigoles 12 seront avantageusement disposées de manière à couvrir au moins partiellement la surface de l'élément de base, permettant ainsi une répartition homogène de la chaleur ou du froid à travers le panneau. Ainsi, dans une des dispositions possibles représentée sur la figure 1, les rigoles 12 définissent une forme de serpentin.

Le panneau comprend également un élément conducteur 13 se présentant sous la forme d'une plaque sensiblement plate, ladite plaque étant fixée sur la face supérieure 11a de l'élément de base 11 de telle sorte à la recouvrir entièrement ou presque entièrement. Dans une configuration possible de l'invention, l'élément conducteur 13 pourra avoir des dimensions suffisantes pour couvrir totalement la face supérieure de plusieurs éléments de base de plusieurs panneaux adjacents fixés ensemble, lesdits panneaux définissant une paroi d'un bâtiment. L'élément conducteur possèdera une bonne conductivité thermique et sera préférentiellement réalisé en acier ou autre métal, en grès ou en céramique. Il pourra être recouvert d'un vernis de décoration sur sa face qui n'est pas en contact avec l'élément de base, de manière à conférer au panneau un aspect esthétique particulier.

Dans une configuration non représentée de l'invention, le panneau pourra également comprendre un élément isolant se présentant sous la forme d'une plaque sensiblement plate, ladite plaque étant fixée sur la face inférieure 11b de l'élément de base 11 de telle sorte à la recouvrir entièrement ou presque entièrement. L'élément isolant possèdera une faible conductivité thermique.

Le panneau comprend également un système de montage/démontage rapide intégré à l'élément de base 11 de manière à permettre la fixation amovible dudit panneau de construction avec un panneau de construction identique ou similaire disposé de manière adjacente à ce dernier dans une paroi d'un bâtiment. Dans la configuration représentée sur la figure 2, ce système de montage/démontage rapide est formé par des pattes 9 formées par moulage et disposées en saillie sur la face inférieure 11b de l'élément de base 11, lesdites pattes en saillie étant destinées à être reçues à l'intérieur de creux correspondants formés dans la face supérieure d'un élément de base du panneau adjacent sur lequel vient se fixer le panneau . Cette fixation pourra notamment se faire par encliquetage. D'autres moyens de connexion mécaniques amovibles pourront toutefois être envisagés.

Lors de l'assemblage de deux panneaux adjacents, il est important de faire communiquer les rigoles d'un des panneaux avec les rigoles de l'autre panneau de manière à assurer la circulation du fluide caloporteur ou refroidisseur entre les deux panneaux. A cette fin, et tel que représenté sur les figures 1 à 3, un moyen envisageable consiste à prévoir un ou plusieurs tubes creux ou parties tubulaires creuses 17 dépassant au niveau d'une face latérale 11c de l'élément de base, ledit tube ou ladite partie tubulaire étant munie le long de sa périphérie et de manière espacée de plusieurs joints d'étanchéité O-ring 17a, ou d'autres moyens d'étanchéité équivalents. Ces tubes ou parties tubulaires 17 sont configurés pour venir s'introduire à l'intérieur de trous traversant 18' formés à l'intérieur de l'élément de base 11' d'un panneau adjacent au panneau. Comme représenté sur la figure 2, de tels trous traversant 18 pourront avantageusement être formés à l'intérieur de l'élément de base 11 du panneau de manière à permettre la connexion fluidique entre le panneau et un panneau adjacent sur la face latérale 11c qui est opposée à celle représentée sur la figure 2. Les trous traversant 18, respectivement 18', débouchent sur une de leurs extrémités sur une des rigoles 12, respectivement 12', de l'élément de base 11, respectivement 11', et sur leur autre extrémité sur une des faces latérales de l'élément de base, la position desdits trous traversant étant sensiblement alignée avec la position des tubes ou parties tubulaires 17 lorsque les éléments de base 11 et 11' sont correctement positionnés pour permettre l'assemblage des deux panneaux adjacents.

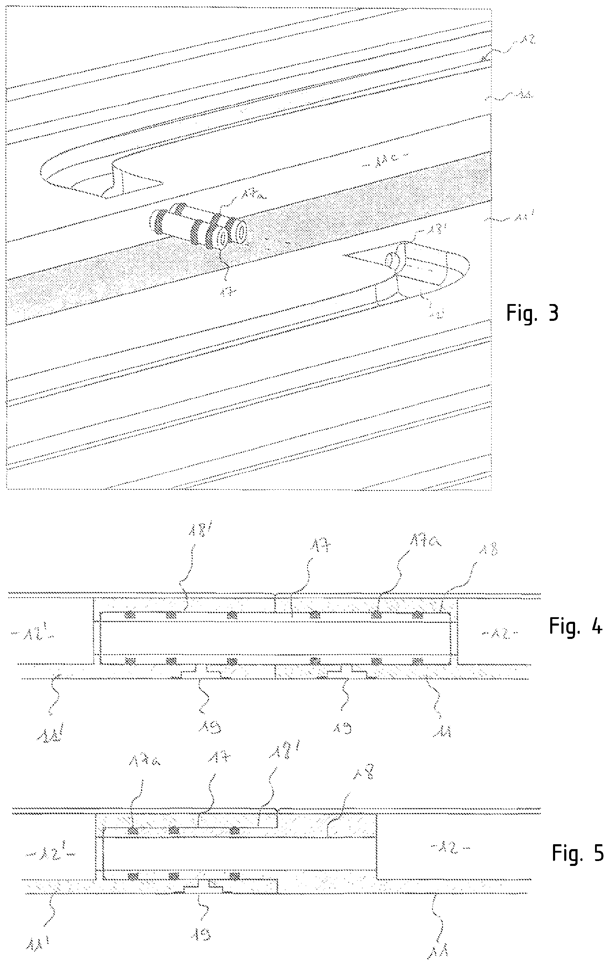

Comme représentés sur les figures 4 et 5, plusieurs solutions techniques sont envisageables pour réaliser de tels moyens de connexion fluidiques.

Dans la configuration représentée sur la figure 4, un tube 17 muni de joints d'étanchéité de type O-ring 17a est utilisé en tant que pièce mâle et est inséré à l'intérieur de deux trous traversants 18 et 18' formés respectivement dans les éléments de base 11 et 11' de deux panneaux adjacents fixés ensemble, De la sorte, une des extrémités du tube 17 est en communication fluidique avec une rigole 12 de l'élément de base 11 et une autre extrémité du tube 17 est en communication fluidique avec une rigole 12' de l'élément de base 11'.

Dans la configuration représentée sur la figure 5, une partie tubulaire 17 munie de joints d'étanchéité de type O-ring 17a et moulée par injection ou co-moulée avec l'élément de base 11 d'un des panneaux dépasse d'une des faces latérales 11c et est inséré à l'intérieur d'un trou traversant 18' formé dans l'élément de base 11' du panneau adjacent. De la sorte, une des extrémités de la partie tubulaire 17 est en communication fluidique avec une rigole 12' de l'élément de base 11' et une autre extrémité du tube 17 est en communication fluidique avec un trou traversant 18 formé dans l'élément de base 11, lui-même débouchant sur une rigole 12 de l'élément de base 11.

De manière à détecter une éventuelle fuite de fluide au niveau de ces moyens de connexion fluidique, notamment du fait du vieillissement ou de la défaillance des joints d'étanchéité 17a, ce qui a généralement pour conséquence la propagation de fluide au niveau de la face inférieure 11b de l'élément de base, il est prévu d'équiper le panneau 10 de moyens de détection de fuite. Comme représenté sur la figure 1, de tels moyens de détection 14 pourront être positionnés sous la face inférieure 11b de telle sorte à être à l'aplomb d'une cavité 19 formée dans l'élément de base 11, telle que représentée sur les figures 2, 4 et 5. La cavité 19 débouche ainsi à l'une de ses extrémités sur la face inférieure 11b de l'élément de base 11 et à une autre extrémité sur un des trous traversant 18 ou 18'. En cas de fuite, le fluide, qui a réussi à s'infiltrer entre la paroi externe du tube ou de la partie tubulaire 17 et la paroi interne du trou traversant 18 ou 18', vient remplir la cavité 19 et entre en contact avec le détecteur 14, lequel est configuré pour générer un signal, notamment de type électrique, en cas de contact avec ledit fluide. Ce signal est ensuite envoyé par liaison filaire à une unité de contrôle chargée de gérer le fonctionnement d'un système d'alimentation en fluide caloporteur ou refroidisseur. La liaison filaire pourra avantageusement être disposée à l'intérieur d'une rainure 16 formée au niveau de la face inférieure 11b de l'élément de base 11. D'autres moyens de liaison, notamment à distance, pourront être envisagés pour transmettre le signal à l'unité de contrôle. Ce signal va donc alerter l'unité de contrôle qu'une fuite est en train de se produire sur le panneau en question. En réponse à ce signal, l'unité de contrôle va interrompre l'alimentation en fluide caloporteur ou refroidisseur de manière à éviter un accroissement de la fuite et va éventuellement émettre une alarme visuelle ou sonore à destination des occupants du bâtiment où est installé le panneau défectueux pour qu'ils effectuent les réparations qui s'imposent. En complément ou en remplacement de cette unité de contrôle, il pourra être prévu d'équiper le panneau 10 d'un moyen indicateur intégré à l'élément de base 11, ledit moyen indicateur étant apte à émettre un signal visuel ou sonore lorsqu'il reçoit le signal émis par le détecteur. Ainsi, il est envisageable d'équiper l'élément de base 11 d'une LED qui sera reliée électriquement au détecteur 14 et qui s'allumera sous l'action d'un courant émis par le détecteur 14 en cas de contact avec le fluide caloporteur ou refroidisseur.

Dans une autre configuration (non représentée) de l'invention, les moyens de détection 14 pourront être positionnés sur la face supérieure 11a de l'élément de base 11 de telle sorte à être à l'aplomb d'une cavité formée dans l'élément de base 11, ladite cavité débouchant à l'une de ses extrémités sur la face supérieure 11a et à une autre extrémité sur un des trous traversant 18 ou 18' mentionnés précédemment. En cas de fuite, le fluide, qui a réussi à s'infiltrer entre la paroi externe du tube ou de la partie tubulaire 17 et la paroi interne du trou traversant 18 ou 18', vient remplir ladite cavité et entre en contact avec les moyens de détection 14. Ainsi, dans cette configuration, la fuite ne sera détectée par les moyens de détection 14 qu'une fois la cavité remplie de fluide. Ceci évitera notamment un problème de détection intempestive de fuite pouvant se produire dans la configuration précédente, dans le cas où du fluide qui s'est formé autour du tube 17 par condensation et qui s'est égoutté à l'intérieur de la cavité 19 sous l'effet de la gravité entre en contact avec les moyens de détection 14 disposés sous la face inférieure 11b de l'élément de base 11. Dans la présente configuration, ce problème est évité du fait que le contact du fluide contenu dans la cavité avec les moyens de détection 14 ne se produit que pour une quantité de fluide minimale, ladite quantité minimale étant très supérieure à celle contenue dans une goutte de fluide formée par condensation.

Dans une configuration possible de l'invention, le détecteur 14 pourra consister en une paire d'électrodes adjacentes maintenues à des potentiels électriques différents, chaque électrode définissant une forme de peigne.

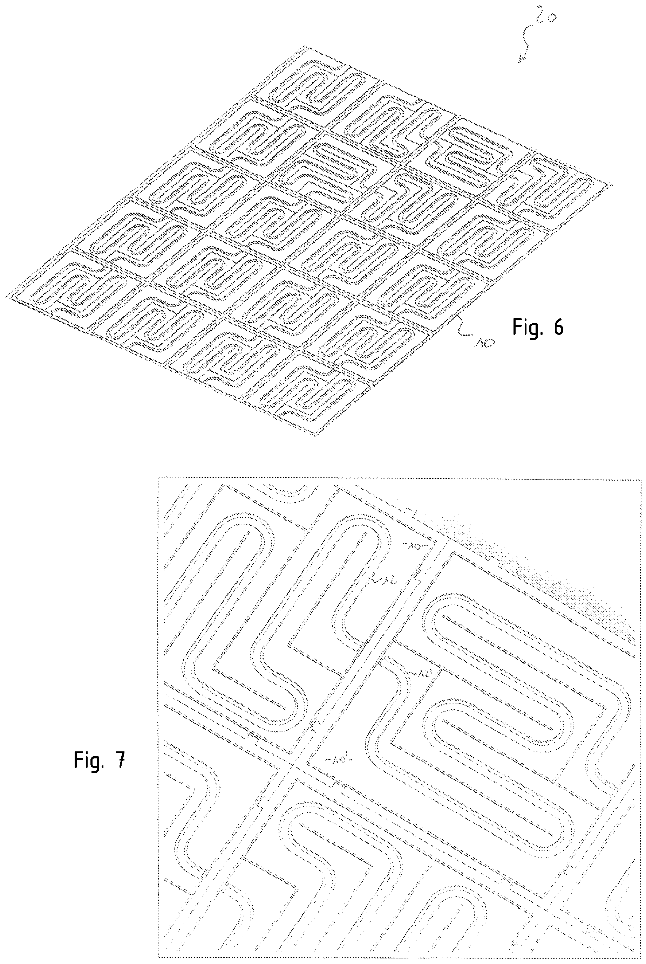

En référence aux figures 6 et 7, il est représenté une paroi formée par l'assemblage d'une pluralité de panneaux de construction 10 et 10' conformes à l'invention, lesdits panneaux étant connectés de manière mécanique et fluidique ensemble de telle sorte à réaliser un ou plusieurs circuits de chauffage et/ou de refroidissement à l'intérieur de la paroi, lesdits circuits étant définis par l'ensemble des rigoles 12 et 12' de chacun des panneaux. Dans une configuration possible de l'invention, la pluralité de panneaux et 10' pourra ne former qu'une partie de la paroi, les zones restantes de la paroi étant alors formées par des panneaux de construction conventionnels.

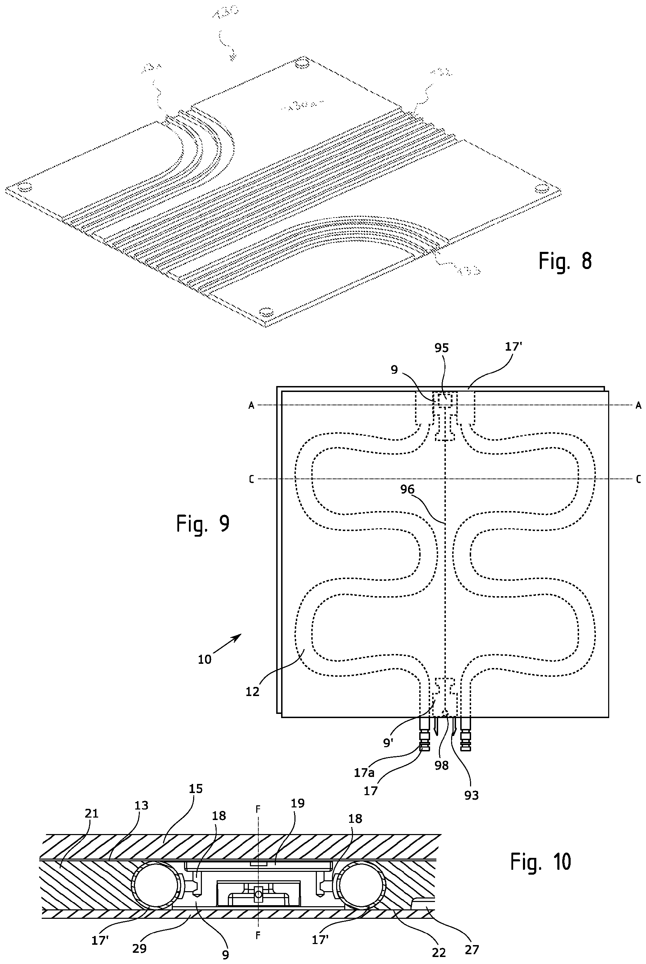

En référence à la figure 8, il est représenté un élément additionnel 130 se présentant sous la forme d'une plaque sensiblement plate, ladite plaque pouvant être fixée, notamment par collage, emboîtage, clipsage ou encastrement, sur la face inférieure 11b de l'élément de base 11 de telle sorte à la recouvrir entièrement ou presque entièrement. La face la de la plaque 130 qui est en contact avec l'élément de base 11 sera avantageusement munie d'une série de canaux droits 132 ou partiellement courbes 131 et 133, lesdits canaux étant aptes à loger des câbles électriques ou d'autres câbles de connexion de type filaire (non représentés). Ce type de câbles est généralement utilisé pour raccorder des appareils électriques utilisés au sein d'un immeuble aux prises électriques de l'immeuble ou pour raccorder entre eux certains de ces appareils électriques. En les positionnant à l'intérieur des panneaux de construction de la présente invention, ces câbles sont cachés, ce qui améliore l'esthétisme de l'immeuble et évite, dans le cas d'un plancher, que les occupants de l'immeuble soient gênés par ces câbles lors de leur déplacement à l'intérieur de l'immeuble.

Les panneaux de la présente invention pourront posséder des dimensions quelconques, que ce soit en longueur, en largeur ou en épaisseur. Toutefois, dans le cas où ces panneaux seront installés sur des dalles existantes, ifs possèderont une épaisseur la plus faible possible de manière à s'intégrer harmonieusement dans le bâtiment. Dans ce cas, leur épaisseur sera de préférence comprise entre 2,5 et 3 cm.

Un mode de réalisation ultérieur de l'invention sera maintenant décrit en relation aux figures 9 et suivantes: La figure 9 illustre un panneau de construction 10 avec des serpentins de circulation 12 réalisés par des tubulures courbes, de façon à réaliser un parcours sous la surface du panneau permettant une répartition homogène de la chaleur Les éléments cachés sous la face supérieure du panneau 10, normalement non visibles, sont représentés par des traits. La figure 9 illustre une disposition d'intérêt pratique, avec deux serpentins de circulation, mais ce nombre n'est pas une limitation de l'invention. Les tuyaux sont préférablement métalliques, synthétiques, ou composites. Des tuyaux composites ayant, par exemple, une paroi interne métallique de faible épaisseur recouverte par une gaine synthétique procurant la solidité voulue.

La connexion hydraulique entre les panneaux est obtenue par les raccords mâle 17 sur une des faces latérales du panneau qui sont dimensionnés pour s'emboîter de façon étanche avec des raccords femelles 17' sur une face latérale d'un panneau compatible identique ou similaire. L'étanchéité est assurée par des joints élastiques, par exemple des joints toriques (O-rings) dans les gorges 17a des raccords mâles 17. D'autres moyens d'étanchéité étant possibles et compris dans le cadre de l'invention.

La solidité de la connexion mécanique entre les panneaux est assurée par le connecteur mâle 9' sur une face latérale qui est arrangé pour s'emboîter dans un raccord femelle 9 prévu sur une face latérale d'un panneau compatible identique ou similaire. Dans l'exemple illustré, le raccord mâle 9' comporte une fourchette élastique 93 qui va s'engager dans un logement réalisé dans le raccord femelle 9. D'autres arrangements sont toutefois possibles.

Avantageusement, le panneau 10 comporte un mécanisme de déverrouillage qui permet, actionnant un élément de commande sur une face latérale, de désolidariser deux connecteurs positionnés sur une autre des faces latérales, par exemple une face latérale opposé. Ce mécanisme permet le démontage extrêmement rapide d'une paroi, un plafond ou un plancher réalisé avec les panneaux de l'invention. L'invention permet de créer ou démonter des parois en quelques minutes, avec un avantage incommensurable par rapport aux installations conventionnelles qui, pour les mêmes opérations, requièrent des temps d'intervention de l'ordre de quelques jours.

Dans l'exemple illustré, qui n'est pas le seul possible dans le cadre de l'invention, le mécanisme de déverrouillage comporte l'oeillet 98 qui, par le câble 96, agit sur le verrou 95 du connecteur femelle 9 sur une autre face latérale, par exemple la face latérale opposée. La figure 10 est un détail de la coupe A-A du panneau 10 qui en illustre mieux la structure interne. Le panneau comprend un élément thermiquement conducteur 13 qui couvre essentiellement toute la face supérieure et est réalisé par exemple en tôle métallique, par exemple tôle d'acier, aluminium, laiton, ou tout autre métal. Cet élément a une fonction thermique en ce qu'il est en contact direct avec le circuit 12 et peut donc efficacement transférer l'énergie thermique du fluide caloporteur à l'ambiant (ou inversement si le circuit 12 est un circuit de refroidissement), et mécanique, en ce qu'il assure la stabilité dimensionnelle du panneau et repartit sur toute la surface les forces de compression lorsque, par exemple, le panneau 10 est utilisé dans la construction d'un plancher.

Préférablement, la tôle conductrice 13 est couverte par une couche de finition extérieure 15 qui confère au panneau l'aspect esthétique souhaité, peut aussi avoir une fonction d'amortissement du bruit, et remplit les exigences de durabilité et résistance qu'on s'attend d'un plancher ou d'une paroi. On peut utiliser pour la réalisation de cette couche n'importe quel matériau idoine, par exemple céramique, grès, pierre, bois, ou des couches plastiques synthétiques. De préférence, on réalisera une couche 15 relativement mince pour limiter l'épaisseur global du panneau 10 et ne pas faire obstacle aux échanges thermiques avec l'ambiant.

Selon une autre variante de l'invention, le panneau de construction 10 pourrait être utilisé pour réaliser un collecteur solaire modulaire permettant de réchauffer le fluide circulant dans le serpentin 12. En ce cas, la couche de finition extérieure pourrait être remplacée par ou inclure une une couche isolante, par exemple une ou plusieurs lames de verre séparées par des espaces vides, permettant aux rayons lumineux de réchauffer la tôle 13, et empêchant la déperdition d'énergie radiante.

La face inférieure du panneau comporte préférablement une couche 29 qui permet d'amortir les vibrations et compenser les éventuelles inégalités du sol sur lequel le panneau est posé. Entre l'élément conducteur 13 et la couche inférieure 29 (ou le sol même si l'on omet la couche 29) on interpose une couche 21 de matériau thermiquement isolant et ayant des caractéristiques mécaniques idoines. Des essais avec des mousses de polyuréthane expansé ont fourni des résultats très favorables en termes d'isolation thermique et résistance aux charges mécaniques, mais d'autres matériaux isolants sont également possibles.

Préférablement, pour réduire la déperdition de chaleur, la couche d'isolation 21 comporte des cavités 27 et est couplé avec une couche de matériau réfléchissant pour réduire la perte d'énergie par rayonnement infrarouge. On peut utiliser à ce but des films métalliques, par exemple en aluminium, préférablement couplé à un film plastique pour améliorer la résistance aux déchirures, ou encore des films plastiques métallisés.

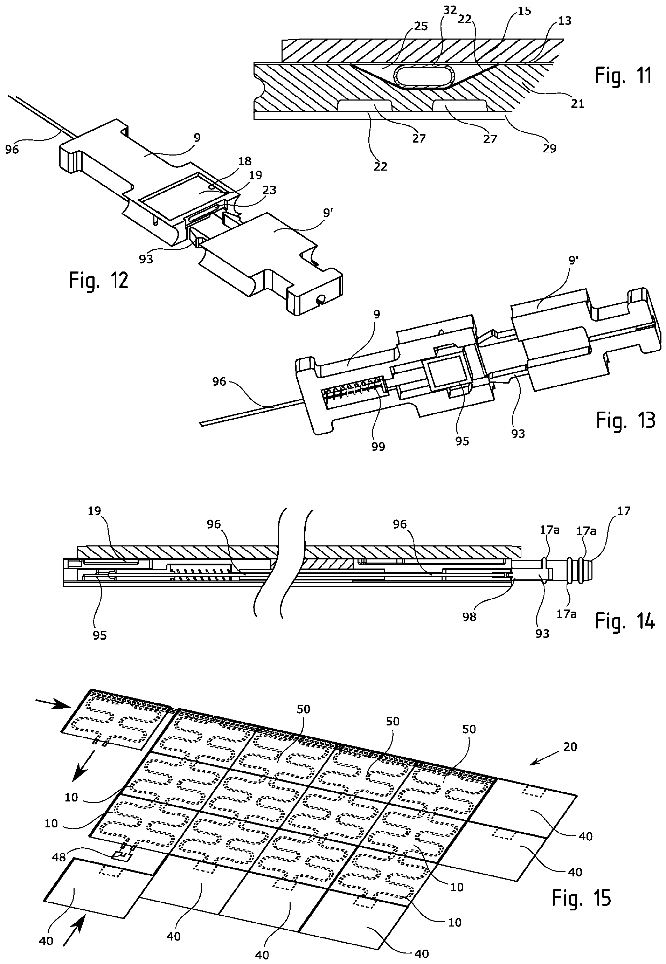

La figure 11 illustre un autre détail de la section C-C du panneau de la figure 10. Cette section coupe la tubulure 32 qui court au-dessous de l'élément conducteur 13 et montre que le tuyau 32 a une section aplatie dont l'axe majeur est essentiellement parallèle à la face supérieure du panneau 10. Cette disposition est doublement avantageuse car, sans réduire excessivement la section hydraulique, elle assure un contact thermique optimal, et augmente l'épaisseur de l'isolation thermique entre le tuyau 32 et la face inférieure. En résultat, la section aplatie permet un meilleur compromis entre échanges thermiques, isolation thermique, et pertes de charge hydrauliques. Les tuyaux sont préférablement métalliques, synthétiques, ou composites.

Pour augmenter encore l'isolation thermique, le tuyau 35 est préférablement logé dans une cavité vide 25 dont la surface interne est revêtue d'une couche réfléchissante pour la radiation infrarouge 22, par exemple un film métallique ou métallisé comme évoqué plus haut. De cette façon, l'isolation thermique vers le bas est assurée par une superposition de couches comprenant : la cavité vide 25 ; un premier film réfléchissant 22 : le matériau isolant 21 : les cavités vides 27 : in deuxième film réfléchissant 22, et optionnellement la couche inférieure 29.

Les figures 12 et 13 illustrent les connecteurs mécaniques 9, 9' et le détecteur de fuite 14. Ce dernier comporte, dans cet exemple, un collecteur 19 en communication avec les raccords fluidiques 17 par les trous 18. Les raccords 17 comportent une pluralité de joints d'étanchéité successifs, dans cet exemple trois O-rings, séparés par des volumes intermédiaires. Les trous 18 connectent le collecteur 19 avec l'espace entre le premier O-ring et le second O-ring en sorte que, si le premier O-ring développe une fuite, le collecteur 19 sera en connexion fluidique avec les moyens de circulation 12 avant-même qu'une fuite se développe vers l'extérieur. De ce fait, le collecteur étant en contact thermique avec la face supérieure du panneau 10, on pourra observer en cas de fuite, une variation locale de la température de surface du panneau.

Une fuite sera alors décelée par un point chaud (ou froid) à la surface du panneau en correspondance du collecteur 19. Des essais ont montré qu'il est possible diagnostiquer et localiser une fuite aisément, sans démonter la paroi, par des mesures thermiques ou des thermographies, par exemple avec une caméra thermique, un thermomètre à infrarouges, ou encore une sonde thermométrique de contact.

Une fois localisé le panneau défectueux par l'analyse thermique décrite ci-dessus, la défaillance peut être confirmée par la présence de fluide dans le collecteur 19, visible par la fenêtre 23. Dans l'exemple illustré sur la figure 12, la fenêtre 23 est sur une face latérale, accessible en démontant partiellement la paroi. D'autres dispositions sont toutefois possibles.

La figure 13 et la figure 14, qui est une coupe du panneau selon la section (F-F) (visible sur la figure 10) illustrent plus particulièrement le fonctionnement du verrou à tiroir 95. Un ressort 99 maintient le verrouillage jusqu'à ce qu'on exerce une force de commande sur l'oeillet 98.

Avantageusement, le système de verrouillage de l'invention ne peut pas être débloqué par des actions accidentelles, le verrou 95 interdisant toute déconnexion intempestive. D'autres moyens équivalents au verrou 95 peuvent être prévus, dans le cadre de l'invention, afin d'assurer que les moyens de connexion mécanique 9, 9' de deux panneaux adjacents ne puissent pas être désolidarisés par erreur, sans une action volontaire sur un élément de commande 98.

La figure 15 montre une possible réalisation d'une paroi, plafond, ou plancher 20 avec les panneaux de l'invention. Préférablement les panneaux 10 sont arrangés pour former des branches de circuit hydrauliques, se ramifiant d'une rangée de panneaux de distribution 50 qui, tout en étant mécaniquement compatibles avec les panneaux 10, et présentant le même aspect lorsqu'ils sont assemblés, ont un circuit hydraulique différent, arrangé pour mettre en parallèle plusieurs branches de circuit hydrauliques. Dans l'exemple illustré, les panneaux 50 ont trois paires de raccords hydrauliques : deux, sur deux faces latérales opposés, pour se connecter à un autre panneau de distribution 50, et un troisième paire, sur une face latérale à 90°, pour se connecter à un panneau de construction 10 constituant le début d'une branche hydraulique en dérivation.

Naturellement le système de l'invention peut aussi comporter des panneaux préfabriqués avec des circuits hydrauliques différents, par exemple des circuits courbes reliant deux faces latérales à 90° l'une de l'autre ou spéciaux aptes a réaliser différentes conformations tout en garantissant la modularité et rapidité de connexion, réduisant ainsi les oeuvres en chantier.

Du côté opposé à celui où on trouve les panneaux de distribution 50, on a des panneaux de fermeture 40. Ces panneaux, mécaniquement compatibles avec les panneaux 10, ne comportent pas de circuit hydraulique. Ils peuvent être coupé à mesure pour réaliser une paroi, plafond, ou plancher 20 aux dimensions voulues.

Les circuits en parallèle réalisés par les panneaux 10 sont terminés hydrauliquement par un raccord en "U", caché sous le panneau de terminaison 40 adjacent. Le raccord en "U" 48, comporte préférablement aussi une vanne de réglage, non representée, permettant d'égaliser les débits dans les différents circuits.

Dans la variante de la figure 14, les panneaux 10 sont assemblés ensemble en le glissant l'un vers l'autre dans une direction horizontale, soit parallèle à leurs faces supérieure 11a et inférieure 11b. Le démontage comporte l'écartement des panneaux également dans la direction horizontale, après déverrouillage. L'invention comprend aussi une variante non illustrée, dans laquelle les moyens de connexion hydraulique et mécanique sont conformés pour permettre un assemblage et une séparation verticaux des panneaux modulaires sont assemblables et séparables. Cette variante permet notamment l'assemblage de planchers surélevés.

Préférablement, la paroi 20 de l'invention est combinée avec une unité de contrôle (non représentée) avec un thermostat, un détecteur différentiel de fuite de fluide, une pompe de circulation, une vanne de sécurité actionnable par le détecteur différentiel de fuites.

Les panneaux de l'invention consentent donc la réalisation de sols et parois chauffantes, ou refroidissantes, ou de collecteurs solaires, avec un minimum d'opérations en chantier, les fonctions d'isolation thermique et acoustique étant assurés par les éléments techniques préfabriqués décrits ci-dessus. Notamment, les panneaux de l'invention comportent une couche de finition qui, en plus d'une réduction considérable des coûts d'installation, permet aussi la réalisation d'un plancher ou une paroi avec une épaisseur bien inférieure à celle d'une couche de finition conventionnelle posée sur des panneaux connus. L'invention se prête donc particulièrement à la pose sur des sols existants, par exemple dans le cadre de travaux de rénovation.

### Numéros de référence

- 9: moyens de connexion mécanique
- 9': moyens de connexion mécanique
- 10: panneau de construction
- 50: panneau distributeur
- 40: panneau de fermeture
- 48: raccord en "U"
- 11: élément de base
- 11a: face supérieure
- 11b: face inférieure
- 11c: faces latérales
- 12: moyens de circulation
- 13: élément conducteur
- 14: moyens de détection de fuite
- 15: couche de finition
- 16: rainure
- 17: moyens de connexion fluidique
- 17a: éléments d'étanchéité
- 18: trous
- 18': trous
- 19: cavité, collecteur
- 20: paroi, plafond ou plancher
- 21: isolation thermique
- 22: élément réfléchissant
- 23: fenêtre
- 25: espace vide
- 27: cavité
- 29: couche inférieure
- 93: fourchette
- 94: logement
- 95: tiroir, verrou
- 96: câble
- 98: crochet, oeillet
- 99: ressort
- 130: élément additionnel
- 131: canaux courbes
- 132: canaux droits
- 133: canaux courbes

## Revendications

1. Panneau de construction (10) destiné à la réalisation de parois chauffantes et/ou refroidissantes de bâtiments comprenant:
- un élément de base (11) défini par une face supérieure (11a), une face inférieure (11b) et plusieurs faces latérales (11c),
- des moyens de circulation (12) d'un fluide caloporteur ou refroidisseur disposés à l'intérieur de l'élément de base 11,
- des moyens de connexion mécanique (9) solidaires de l'élément de base (11), lesdits moyens de connexion mécanique (9) étant aptes à assurer une fixation amovible du panneau de construction avec un panneau de construction identique ou similaire disposé de manière adjacente à ce dernier,
- des moyens de connexion fluidique (17) aptes à permettre la circulation du fluide caloporteur ou refroidisseur entre le panneau de construction (10) et un panneau de construction identique ou similaire fixé à ce dernier,
- des moyens de détection de fuite (14) aptes à détecter une fuite du fluide caloporteur ou refroidisseur au niveau de la face inférieure (11b) ou supérieure (11a) de l'élément de base (11), **caractérisé en ce que** le panneau comporte également un élément thermiquement conducteur (13) sensiblement plat, fixé sur la face supérieure (11a) de l'élément de base (11) de telle sorte à la recouvrir entièrement ou presque entièrement, et **en ce que** les moyens de détection de fuite (14) comprennent un collecteur (19) pour capter le fluide caloporteur ou refroidisseur fuyant des dits moyens de circulation (12), le collecteur étant en contact thermique avec la face supérieure du panneau de façon à générer, en cas de fuite, une variation locale de la température de surface du panneau.

2. Panneau de construction (10) selon la revendication 1, **caractérisé en ce qu'**il comprend également un élément thermiquement isolant sensiblement plat, fixé sur la face inférieure (11b) de l'élément de base (11) de telle sorte à la recouvrir entièrement ou presque entièrement.

3. Panneau de construction (10) selon la revendication précédente, les moyens de circulation (12) comprenant un serpentin réalisé par un tuyau de section aplatie, l'axe majeur de la section étant parallèle à la face supérieure.

4. Panneau de construction (10) selon l'une des revendications précédentes, dans lequel l'élément conducteur (13) est couvert par une couche de finition formant plancher.

5. Panneau de construction selon la revendication précédente, dans lequel l'élément conducteur (13) est réalisé en acier, et la couche de finition est réalisé dans un matériau parmi céramique, grès, bois, plastique.

6. Panneau de construction (10) selon l'une des revendications de 2 à 3, dans lequel les moyens de circulation (12) sont au moins partiellement entourés par une matrice de polymère injectée, notamment une matrice de polyuréthane.

7. Panneau de construction (10) selon l'une des revendications de 4 à 5, dans lequel l'élément thermiquement isolant comprend une ou plus couches réfléchissantes pour la radiation infrarouge, par exemple des couches métalliques ou des films plastiques métallisés.

8. Panneau de construction (10) selon l'une des revendications de 4 à 6, dans lequel l'élément thermiquement isolant comprend une couche de polymère injectée, notamment une couche de polyuréthane, présentant des cavités moulées.

9. Panneau de construction (10) selon la revendication 7, dans l'élément thermiquement isolant est séparé des moyens de circulations (12) par un espace vide dont une paroi interne est revêtue d'une couche réfléchissante pour la radiation infrarouge.

10. Panneau de construction (10) selon la revendication 1, dans lequel le collecteur est arrangé pour capter le fluide caloporteur ou refroidisseur fuyant des moyens de connexion fluidique (17).

11. Panneau de construction (10) selon l'une des revendications précédentes, dans lequel les moyens de connexion fluidique (17) comprennent une pluralité d'éléments d'étanchéité (17a) en série arrangés pour empêcher les fuites de fluide caloporteur ou refroidisseur, au moins un volume intermédiaire entre deux éléments d'étanchéité successifs étant connecté fluidiquement avec les moyens de détection de fuites.

12. Panneau de construction (10) selon la revendication précédente, dans lequel les éléments d'étanchéité (17a) sont des joints toriques élastiques.

13. Panneau de construction (10) selon l'une des revendications précédentes, dans lequel les éléments de connexion mécanique (9) comprennent un mécanisme de déverrouillage avec un élément de commande (98), permettant de désolidariser deux panneaux adjacent par une action volontaire sur l'élément de commande (98).

14. Paroi, plafond, ou plancher (20), comprenant une pluralité de panneaux de construction (10) selon l'une des revendications précédentes, lesdits panneaux étant connectés de manière mécanique et fluidique ensemble de telle sorte à réaliser un ou plusieurs circuits de chauffage et/ou de refroidissement à l'intérieur de la paroi, chaque circuit de chauffage et/ou de refroidissement pouvant être raccordé à un système d'alimentation en fluide caloporteur ou refroidisseur.

15. Paroi, plafond, ou plancher (20) selon la revendication précédente, dans laquelle les circuits de chauffage et/ou de refroidissement comportent une pluralité de branches de circuit hydraulique, comprenant en outre des éléments de terminaison, pour terminer lesdites branches, et des panneaux de construction (50) selon l'une des revendications précédentes réalisant des éléments de distribution permettant de disposer en parallèle une pluralité des dites branches.

16. Paroi, plafond, ou plancher (20) selon la revendication précédente, lesdits éléments de terminaison comprenant une vanne pour générer une perte de charge hydraulique souhaitée.

17. Système d'alimentation en fluide caloporteur ou refroidisseur en combinaison avec une paroi, plafond, ou plancher (20) selon l'une des revendications de 14 à 16 dont il assure l'alimentation en fluide caloporteur ou refroidisseur, comprenant une unité de contrôle avec un thermostat, un détecteur différentiel de fuite de fluide, une pompe de circulation, une vanne de sécurité actionnable par le détecteur différentiel de fuites.

## Patentansprüche

1. Bauplatte (10) zum Erzeugen von Heiz- und/oder Kühlwänden von Gebäuden, umfassend:
- ein Basiselement (11), das durch eine Oberseite (11a), eine Unterseite (11b) und eine Vielzahl von Seitenflächen definiert ist (11c),
- Zirkulationsmittel (12) eines Wärmeübertragungsmediums oder eines Kühlermediums, welche im Basiselement (11) angeordnet sind,
- mechanische Verbindungsmittel (9), welche fest mit dem Basiselement (11) verbunden sind, wobei die besagten mechanischen Verbindungsmittel (9) in der Lage sind, eine entfernbare Befestigung der Konstruktionsplatte mit einer Platte von identischer oder ähnlicher Konstruktion zu gewährleisten, die benachbart zu dieser angeordnet ist,
- Fluidverbindungsmittel (17), welche geeignet sind, die Zirkulation des Wärmeübertragungsmediums oder des Kühlermediums zwischen der Bauplatte (10) und einer an ihr befestigten Bauplatte von identischen oder ähnlichen Konstruktion zu ermöglichen,
- Leckerfassungsmittel (14), welche in der Lage sind, ein Austreten des Wärmeübertragungsmediums oder des Kühlermediums bei der Unterseite (11b) oder der Oberseite (11a) des Basiselements (11) zu erfassen,
**dadurch gekennzeichnet, dass** die Platte zudem ein im Wesentlichen flaches, thermisch leitfähiges Element (13) umfasst, welches an der Oberseite (11a) des Basiselements (11) befestigt ist, um es vollständig oder nahezu vollständig abzudecken,
und dass die Leckerfassungsmittel (14) einen Kollektor (19) umfassen, um das aus den besagten Zirkulationsmitteln (12) ausfliessende Wärmeübertragungsmedium oder Kühlermedium zu sammeln, wobei der Kollektor in thermischem Kontakt mit der Oberseite der Platte steht, um im Falle eines Lecks eine lokale Variation der Oberflächentemperatur der Platte zu erzeugen.

2. Bauplatte (10) gemäss Anspruch 1, **dadurch gekennzeichnet, dass** sie ebenfalls ein im Wesentlichen flaches thermisch isolierendes Element umfasst, das an der Unterseite (11b) des Basiselements (11) derart befestigt ist, dass es dieses vollständig oder fast vollständig abdeckt.

3. Bauplatte (10) gemäss dem vorhergehenden Anspruch, wobei die Zirkulationsmittel (12) eine Rohrschlange umfasst, welche aus einem Rohr mit einem abgeflachten Querschnitt ausgeführt ist, wobei die Hauptachse des Querschnitts parallel zur Oberseite ist.

4. Bauplatte (10) gemäss irgendeinem der vorhergehenden Ansprüche, worin das leitfähige Element (13) durch eine einen Boden bildende Schicht bedeckt ist.

5. Bauplatte (10) gemäss dem vorhergehenden Anspruch, worin das leitfähige Element (13) aus Stahl hergestellt ist und die Deckschicht aus einem Material ausgewählt aus Keramik, Sandstein, Holz, Kunststoff hergestellt ist.

6. Bauplatte (10) gemäss einem der Ansprüche 2 bis 3, worin die Zirkulationsmittel (12) zumindest teilweise durch eine Matrix aus injiziertem Polymer umgeben sind, insbesondere durch eine Polyurethanmatrix.

7. Bauplatte (10) gemäss einem der Ansprüche 4 bis 5, worin das thermisch leitfähige Element (13) eine oder mehrere reflektierende Schichten für Infrarotstrahlung umfasst, beispielsweise Metallschichten oder metallisierte Kunststofffolien.

8. Bauplatte (10) gemäss einem der Ansprüche 4 bis 6, worin das thermisch isolierende Element eine injizierte Polymerschicht umfasst, insbesondere eine Polyurethanschicht mit Formhohlräumen.

9. Bauplatte (10) gemäss Anspruch 7, worin das thermisch isolierende Element von den Zirkulationsmitteln (12) durch einen Leerraum getrennt ist, dessen eine Innenseite mit einer reflektierenden Schicht für Infrarotstrahlung bedeckt ist.

10. Bauplatte (10) gemäss Anspruch 1, worin der Kollektor angeordnet ist, um das aus den Fluidverbindungsmitteln (17) ausfliessende Wärmeübertragungsmedium oder Kühlermedium zu sammeln.

11. Bauplatte (10) gemäss irgendeinem der vorhergehenden Ansprüche, worin die Fluidverbindungsmittel (17) eine Vielzahl von seriell angeordneten Dichtungselementen (17a) umfassen, um das Entweichen von Wärmeübertragungsmedium oder Kühlermedium zu verhindern, wobei mindestens ein Zwischenvolumen zwischen zwei aufeinanderfolgenden Dichtungselementen in Fluidverbindung mit den Leckerfassungsmitteln steht.

12. Bauplatte (10) gemäss dem vorhergehenden Anspruch, worin die Dichtungselemente (17a) elastische O-Ringe sind.

13. Bauplatte (10) gemäss einem der vorhergehenden Ansprüche, worin die mechanischen Verbindungselemente (9) einen Entriegelungsmechanismus mit einem Bedienungselement (98) umfassen, so dass zwei benachbarte Paneele durch eine absichtliche Handlung auf dem Bedienungselement (98) gelöst werden können.

14. Wand, Decke oder Boden (20) mit einer Vielzahl von Bauplatten (10) gemäss einem der vorhergehenden Ansprüche, wobei die besagten Platten mechanisch und fluidisch miteinander verbunden sind, um einen oder mehrere Heiz- und / oder Kühlkreisläufe innerhalb der Wand zu bilden, wobei jeder Heiz- und / oder Kühlkreislauf an ein Versorgungssystem für Wärmeübertragungsmedium oder Kühlermedium anschliessbar ist.

15. Wand, Decke oder Boden (20) gemäss dem vorhergehenden Anspruch, worin die Heiz- und / oder Kühlkreisläufe eine Vielzahl von Verzweigungen des Hydraulikkreislaufs aufweisen, zudem mit Abschlusselementen zum Abschluss der besagten Abzweigungen, und Gebäudeplatten (50) gemäss einem der vorhergehenden Ansprüchen, die Verteilungselemente erzeugen, die es erlauben, eine Vielzahl der besagten Verzweigungen parallel anzuordnen.

16. Wand, Decke oder Boden (20) gemäss dem vorherigen Anspruch, wobei die besagten Abschlusselemente ein Ventil zum Erzeugen eines gewünschten hydraulischen Druckverlusts umfassen.

17. Versorgungssystem für Wärmeübertragungsmedium oder Kühlermedium in Verbindung mit einer Wand, einer Decke oder einem Boden (20) gemäss einem der Ansprüche 13 bis 14, für die sie die Zufuhr vom Wärmeübertragungsmedium oder Kühlermedium liefert, mit einer Bedienungseinheit mit einem Thermostat, einem Differential-Flüssigkeitsleckdetektor, einer Zirkulationspumpe, einem Sicherheitsventil, das durch den Differential-Leckdetektor betätigt werden kann.

## Claims

1. Construction panel (10) for producing heating and/or cooling walls of buildings, comprising:
- a base element (11) defined by an upper face (11a), a lower face )11b) and a plurality of lateral faces (11c),
- circulation means (12) of a heat-carrying fluid or coolant disposed within the base element (11),
- mechanical connection means (9) integral with the base element (11), said mechanical connection means (9) being able to ensure a removable attachment of the building panel with a panel of identical or similar construction disposed adjacent to the latter,
- fluidic connection means (17) adapted to allow the circulation of the heat-carrying fluid or coolant between the building panel (10) and a panel of identical or similar construction fixed thereto,
- leak detection means (14) capable of detecting leakage of the heat-carrying fluid or coolant at the lower face (11b) or upper face (11a) of the base element (11),
**characterized in that** the panel also comprises a substantially flat thermally conductive element (13) fixed on the upper face (11a) of the base element (11) so as to completely or almost completely cover it,
and **in that** the leak detection means (14) comprise a collector (19) for collecting the heat-carrying fluid or coolant leaking from said circulation means (12), the collector being in thermal contact with the upper face of the panel so as to generate, in case of leakage, a local variation of the surface temperature of the panel.

2. Construction panel (10) according to claim 1, **characterized in that** it also comprises a substantially flat thermally insulating element fixed on the lower face (11b) of the base element (11) so as to completely or almost entirely cover it.

3. Construction panel (10) according to the preceding claim, the circulation means (12) comprising a coil formed by a pipe of flattened section, with the major axis of the section being parallel to the upper face.

4. Construction panel (10) according to one of the preceding claims, wherein the conductive element (13) is covered by a floor-forming finish layer.

5. Construction panel according to the preceding claim, wherein the conductive element (13) is made of steel, and the finishing layer is made of a material from among ceramics, stoneware, wood, plastic.

6. Construction panel (10) according to one of the claims 2 to 3, wherein the circulation means (12) are at least partially surrounded by an injected polymer matrix, in particular a polyurethane matrix.

7. Construction panel (10) according to one of the claims 4 to 5, wherein the thermally insulating member comprises one or more reflective layers for infrared radiation, for example metal layers or metallized plastic films.

8. Construction panel (10) according to one of the claims 4 to 6, wherein the thermally insulating element comprises an injected polymer layer, in particular a polyurethane layer, having molded cavities.

9. Construction panel (10) according to claim 7, wherein the thermally insulating element is separated from the circulation means (12) by a void space, of which an inner wall is coated with a reflective layer for infrared radiation.

10. Construction panel (10) according to the preceding claim, wherein the collector is arranged to capture the heat-carrying fluid or coolant leaking from the fluidic connection means (17).

11. Construction panel (10) according to one of the preceding claims, wherein the fluidic connection means (17) comprise a plurality of sealing elements (17a) in series, arranged to prevent the leakage of heat-carrying fluid or coolant, at least one intermediate volume between two successive sealing elements being fluidly connected with the leak detection means.

12. Construction panel (10) according to the preceding claim, wherein the sealing elements (17a) are elastic O-rings.

13. Construction panel (10) according to one of the preceding claims, wherein the mechanical connection elements (9) comprise an unlocking mechanism with a control element (98), for separating two adjacent panels by a voluntary action on the control element (98).

14. Wall, ceiling, or floor (20) comprising a plurality of building panels (10) according to one of the preceding claims, said panels being mechanically and fluidly connected together so as to provide one or more heating and/or cooling circuits within the wall, each heating and/or cooling circuit being connectable to a supply system for heat-carrying fluid or coolant.

15. Wall, ceiling, or floor (20) according to the preceding claim, wherein the heating and/or cooling circuits comprise a plurality of hydraulic circuit branches, further comprising termination elements, to terminate said branches, and building panels (50) according to one of the preceding claims, providing distribution elements for arranging in parallel a plurality of said branches.

16. Wall, ceiling, or floor (20) according to the preceding claim, said termination elements comprising a valve for generating a desired hydraulic head loss.

17. Supply system for heat-carrying fluid or coolant in combination with a wall, ceiling, or floor (20) according to one of the claims 14 to 16, for which it provides the supply of heat-carrying fluid or coolant, comprising a control unit with a thermostat, a differential fluids' leak detector, a circulation pump, a safety valve that can be actuated by the differential leak detector.
